# EUROPEAN PATENT APPLICATION

(11) **EP 4 631 725 A1**
(43) Date of publication of application: **15.10.2025**
(21) Application number: 23900153.0
(22) Date of filing: 05.12.2023
(51) Int. Cl.: B32B 33/00, B32B 3/30, B32B 27/28, B32B 27/06, B32B 27/32, B32B 27/14, B32B 5/16, A47J 36/02, A47J 36/04, A47J 27/00

(54) **INNER POT, COOKING APPLIANCE AND PREPARATION METHOD FOR INNER POT**

(30) Priority: 06.12.2022 CN 202211559376; 06.12.2022 CN 202223283632 U
(71) Applicant: Zhejiang Supor Electrical Appliances Manufacturing Co., Ltd., Hangzhou, Zhejiang 310052 (CN)
(72) Inventor: LI, Jiang, Hangzhou, Zhejiang 310052 (CN); LI, Jian, Hangzhou, Zhejiang 310052 (CN); LI, Zeyong, Hangzhou, Zhejiang 310052 (CN)
(74) Representative: LLR
(86) International application number: PCT/IB2023/062226
(87) International publication number: WO 2024/121734

(57) **Abstract**

An inner pot, a cooking appliance, and a preparation method for inner pot are provided. The inner pot (100) comprises a substrate (110), a transition layer (120), a non-stick layer (130), and a wear-resistant particle layer (140). The transition layer (120) is attached to an inner surface of the substrate (110). The non-stick layer (130) is attached to an inner surface of the transition layer (120). The wear-resistant particle layer (140) is composed of multiple protruding particles (141) spaced apart from each other and attached to an inner surface of the non-stick layer (130).

## Description

### Technical Field

The present application relates to the technical field of cooking appliances, and in particular, to an inner pot, a cooking appliance, and a preparation method for inner pot.

### Background of the Invention

At present, the inner pots of electric rice cookers on the market generally use non-stick coatings on their surfaces, such as polytetrafluoroethylene (PTFE) coatings, tetrafluoroethylene-perfluoroalkoxy vinyl ether copolymer (PFA, Polyfluoroalkoxy) coatings, and the like.

However, non-stick coatings generally have the problems of low hardness and poor scratch resistance. During use, the coatings may peel off due to scratches, resulting in the failure of the non-stick property, causing food to stick to the pots and making cleaning difficult. Additionally, damage to the coatings may lead to the release of metal such as aluminum, which may affect human health and seriously impact user experience.

Therefore, the peeling and wear of the inner pot coatings in electric rice cookers has become a common issue in the industry and a major focus of consumer complaints.

Accordingly, there is a need for an inner pot, a cooking appliance, and a preparation method for inner pot, to at least partially solve the above problems.

### Summary of the Invention

A series of simplified concepts are introduced in the section of Summary of the Invention, which will be further described in detail in the section of Detailed Description. The Summary of the Invention section of the present application is not intended to limit the key features or essential technical features of the claimed technical solutions, nor is it intended to define the scope of protection of the claimed technical solutions.

To at least partially solve the above problems, a first aspect of the present application provides an inner pot for a cooking appliance, the inner pot comprising:
a substrate;
a transition layer, which is attached to an inner surface of the substrate;
a non-stick layer, which is attached to an inner surface of the transition layer; and
a wear-resistant particle layer, which is composed of multiple protruding particles spaced apart from each other and attached to an inner surface of the non-stick layer.

According to the inner pot of the present application, by providing the wear-resistant particle layer on the surface of the non-stick layer, the scratch resistance of the inner pot can be improved without compromising the continuity and integrity of the non-stick layer, and without significantly affecting the corrosion resistance of the inner pot or the non-stick property.

Optionally, the thickness of the transition layer is 10 µm to 20 µm. According to this embodiment, the transition layer can serve as an intermediate transition to improve the bonding strength of the non-stick layer.

Optionally, the thickness of the non-stick layer is 10 µm to 60 µm. Thereby, good non-stick property can be obtained.

Optionally, the height by which the protruding particles of the wear-resistant particle layer protrude from the inner surface of the non-stick layer is 10 µm to 500 µm. This can thereby improve the wear resistance and increase the number of scratch cycles that can be withstood.

Optionally, the height by which the protruding particles of the wear-resistant particle layer protrude from the inner surface of the non-stick layer is 20 µm to 200 µm. According to this embodiment, the scratch resistance can be further improved.

Optionally, the height by which the protruding particles of the wear-resistant particle layer protrude from the inner surface of the non-stick layer is 50 µm to 100 µm. According to this embodiment, the scratch resistance can be further improved.

Optionally, the diameter of the protruding particles of the wear-resistant particle layer is 10 µm to 500 µm. Thereby, the wear resistance of the wear-resistant particle layer can be improved, while having less impact on the non-stick property of the non-stick layer.

Optionally, the diameter of the protruding particles of the wear-resistant particle layer is 50 µm to 300 µm. According to this embodiment, the number of scratch-resistant cycles that can be withstood by the wear-resistant particle layer can be further improved.

Optionally, the diameter of the protruding particles of the wear-resistant particle layer is 100 µm to 200 µm. According to this embodiment, the number of scratch-resistant cycles that can be withstood by the wear-resistant particle layer can be further improved.

Optionally, the ratio of the total area of the contact surfaces of the protruding particles of the wear-resistant particle layer with the non-stick layer, to the inner surface area of the non-stick layer, is 5% to 50%. According to the above configuration, the wear resistance of the inner pot can be improved, while having less impact on the non-stick property.

Optionally, the ratio of the total area of the contact surfaces of the protruding particles of the wear-resistant particle layer with the non-stick layer, to the inner surface area of the non-stick layer, is 10% to 30%. According to this embodiment, the scratch resistance of the inner pot can be improved, while further reducing the impact on the non-stick property.

Optionally, the ratio of the total area of the contact surfaces of the protruding particles of the wear-resistant particle layer with the non-stick layer, to the inner surface area of the non-stick layer, is 15% to 25%. According to this embodiment, the scratch resistance of the inner pot can be improved, while further reducing the impact on the non-stick property.

Optionally, the polarity of the material of the transition layer is lower than that of the substrate, and higher than that of the non-stick layer. According to the above configuration, the polarity of the material of the transition layer is between that of the substrate and that of the non-stick layer, so that the transition layer can form good bonding with both the substrate and the non-stick layer, allowing the non-stick layer to be firmly attached and reducing the possibility of detachment.

Optionally, the polarity of the material of the wear-resistant particle layer is higher than that of the non-stick layer. According to this embodiment, the wear-resistant particle layer is made of a material selected to be different from the material of the non-stick layer, so that the wear-resistant particle layer has good scratch resistance.

Optionally, the transition layer and the non-stick layer are bonded by thermal fusion. Optionally, the non-stick layer and the protruding particles of the wear-resistant particle layer are bonded by thermal fusion. According to the above configurations, the bonding strength between the layers can be further improved, thereby enhancing the durability of the inner pot.

Optionally, the protruding particles of the wear-resistant particle layer are formed by the melted wear-resistant material contracting, cooling, and solidifying on the melted non-stick material. According to the above configuration, a firm bonding of the wear-resistant particle layer to the surface of the non-stick layer can be achieved without damaging the integrity of the non-stick layer.

Optionally, the interface material of the transition layer includes a material similar to the non-stick material of the non-stick layer; and, a material is added to the interface material of the transition layer such that the polarity of the material of the transition layer is lower than that of the substrate and higher than that of the non-stick layer.

Optionally, the interface material of the transition layer includes polyamide-imide, and at least one of polytetrafluoroethylene and polyfluoroalkoxy. According to this embodiment, the materials are readily available, which is beneficial for improving the production efficiency and reducing the cost.

Optionally, the non-stick material of the non-stick layer includes at least one of polytetrafluoroethylene and polyfluoroalkoxy. According to this embodiment, the materials are readily available, which is beneficial for improving the production efficiency and reducing the cost.

Optionally, the non-stick material is polytetrafluoroethylene, and the thickness of the non-stick layer is 10 µm to 30 µm; or the non-stick material is polyfluoroalkoxy, and the thickness of the non-stick layer is 20 µm to 60 µm. According to this embodiment, an excellent non-stick effect can be obtained.

Optionally, the wear-resistant material of the wear-resistant particle layer includes at least one of polyethersulfone and polyaryletherketone. According to this embodiment, the materials are readily available, which is beneficial for improving the production efficiency and reducing the cost, and enables the wear-resistant particle layer to smoothly attach to and form on the non-stick layer.

Optionally, the wear-resistant material of the wear-resistant particle layer is a mixture of polyethersulfone and polyaryletherketone, wherein the mass percentage of polyethersulfone is not less than 50%. According to this embodiment, cost savings can be achieved.

The second aspect of the present application provides a cooking appliance comprising:
a pot body;
the inner pot as described above in the first aspect, which can be placed in the pot body and removed from the pot body;
a lid body, which is configured to be openable and closable on the pot body, wherein when the inner pot is placed in the pot body and the lid body is closed on the pot body, a cooking space is formed between the lid body and the inner pot.

The cooking appliance of the present application includes the inner pot as described above in the first aspect, thereby achieving technical effects similar to those of the inner pot as described above in the first aspect.

The third aspect of the present application provides a preparation method for inner pot, used for preparing the inner pot as described above in the first aspect, the preparation method comprising:
S1: preparing the substrate;
S2: preparing the transition layer on the substrate;
S3: preparing the non-stick layer and the wear-resistant particle layer, wherein said S3 comprises:
   spraying a non-stick material onto an inner side of the transition layer to form a non-stick material film, spraying a wear-resistant material onto an inner side of the non-stick material film to form a wear-resistant material film, heating the non-stick material film and the wear-resistant material film to melt them together, allowing the melted wear-resistant material to contract on the melted non-stick material, cooling and solidifying to form the non-stick layer attached to the transition layer and the multiple protruding particles attached to the non-stick layer.

According to the preparation method for inner pot of the third aspect of the present application, the wear-resistant particle layer can be firmly attached to the surface of the non-stick layer without damaging the continuity and integrity of the non-stick layer, thereby achieving the technical effect of improving the scratch resistance of the inner pot without affecting the corrosion resistance of the inner pot or causing a significant impact on the non-stick property; furthermore, the non-stick layer and the wear-resistant particle layer are sintered and formed in a single step, which reduces the processing steps and is beneficial for improving the production efficiency.

The fourth aspect of the present application provides a preparation method for inner pot, used for preparing the inner pot as described above in the first aspect, the preparation method comprising:
S1: preparing the substrate;
S2: preparing the transition layer on the substrate;
S3: preparing the non-stick layer and the wear-resistant particle layer, wherein said S3 comprises:
   S31: spraying a non-stick material onto an inner side of the transition layer to form a non-stick material film, heating the non-stick material film to melt it, cooling and solidifying to form the non-stick layer;
   S32: spraying a wear-resistant material onto an inner side of the non-stick layer to form a wear-resistant material film, heating the wear-resistant material film and the non-stick layer to melt them together, allowing the melted wear-resistant material to contract on the melted non-stick material, cooling and solidifying to form the non-stick layer attached to the transition layer and the multiple protruding particles attached to the non-stick layer.

According to the preparation method for inner pot of the fourth aspect of the present application, the wear-resistant particle layer can be firmly attached to the surface of the non-stick layer without damaging the continuity and integrity of the non-stick layer, thereby achieving the technical effect of improving the scratch resistance of the inner pot without affecting the corrosion resistance of the inner pot or causing a significant impact on the non-stick property; furthermore, the non-stick layer and the wear-resistant particle layer are sintered and formed in two separate steps, which improves the preparation success rate and is beneficial for increasing the product yield and reducing the production cost.

Optionally, the heating temperature is 350°C to 440°C, and the heating time is 3 min to 30 min. According to this embodiment, this can be beneficial for improving the production efficiency and reducing the cost; meanwhile, the above conditions are conducive to adjusting the surface tension of the melted wear-resistant material and the melted non-stick material, so that the melted wear-resistant material can better contract on the melted non-stick material to form a firmly attached wear-resistant particle layer.

Optionally, the thickness of the non-stick material film is 10 µm to 60 µm.

Optionally, the thickness of the wear-resistant material film is 5 µm to 100 µm. Hence, this is beneficial for forming the protruding particles having predetermined height and diameter.

Optionally, the thickness of the wear-resistant material film is 10 µm to 50 µm. Hence, this is further beneficial for forming the protruding particles with predetermined height and diameter.

Optionally, said S1 further comprises: performing sandblasting treatment and/or degreasing treatment on the substrate to increase the roughness of the substrate.

According to this configuration, the attachment strength of the transition layer can be improved.

Optionally, said S2 further comprises:
S21: spraying an interface material onto the substrate to form an interface material film, the thickness of the interface material film being 10 µm to 20 µm;
S22: heating the interface material film at 80°C to 200°C for 5 min to 20 min to form the transition layer. According to this embodiment, the process is simple and low-cost.

Optionally, the wear-resistant material is configured as powder or an aqueous dispersion with a solid content of 20% to 50%, and the particle size of the particles of the wear-resistant material is 1 µm to 5 µm; the wear-resistant material film is formed by means of electrostatic spraying or pressure spraying. According to the above configuration, the process is simple, the cost is low, and the product yield is high.

### Brief Description of the Drawings

The following drawings form part of the present application and are provided for understanding the present application. The drawings illustrate embodiments of the present application and their description serves to explain the principles of the present application. In the drawings:
Figure 1 is a schematic enlarged structural view of an inner pot according to a preferred embodiment of the present application;
Figure 2 is a schematic flow diagram of a preparation method for inner pot according to a preferred embodiment of the present application; and
Figure 3 is a schematic flow diagram of a preparation method for inner pot according to another preferred embodiment of the present application.

Introduction of reference signs:
100: inner pot;
110: substrate;
120: transition layer;
130: non-stick layer;
140: wear-resistant particle layer;
141: protruding particles.

### Detailed Description of the Invention

In the following description, numerous specific details are provided to facilitate a more thorough understanding of the present application. However, it is evident to those skilled in the art that the present application can be implemented without one or more of these details. In other examples, certain technical features known in the art are not described to avoid confusion with the present application.

It should be noted that the terms used herein are intended only to describe specific embodiments and are not intended to limit the exemplary embodiments according to the present application. As used herein, unless otherwise explicitly indicated by the context, the singular forms also intend to include the plural forms. Additionally, it should be understood that when the terms "comprise" and/or "include" are used in this description, they indicate the presence of the stated features, wholes, steps, operations, elements, and/or components, but do not exclude the presence or addition of one or more other features, wholes, steps, operations, elements, components, and/or combinations thereof.

The ordinal numbers such as "first" and "second" cited in the present application are only identifiers and do not carry any other meanings, such as a specific order. For example, the term "first component" itself does not imply the presence of a "second component," and the term "second component" itself does not imply the presence of a "first component." It should also be noted that the terms "upper," "lower," "front," "rear," "left," "right," "inner," "outer," and similar expressions used herein are only for illustrative purposes and do not constitute limitations.

Now, exemplary embodiments according to the present application will be described in more detail with reference to the accompanying drawings.

One aspect of the present application provides a cooking appliance, which generally includes a pot body and a lid body. The pot body is substantially in a rounded-rectangular cuboid shape, and includes a middle plate and a housing connected to the lower side of the middle plate, both of which may be integrally injection-molded. The middle portion of the middle plate is provided with an inner pot receiving cavity in a cylindrical shape, and the inner pot can be freely placed in the inner pot receiving cavity or removed from the inner pot receiving cavity, thereby facilitating the cleaning of the inner pot. The inner pot typically has a circular opening at the upper surface, which is used for holding food ingredients to be heated, such as rice or soup. **The** pot body includes a heating device for heating the inner pot.

**The** lid body has a shape substantially corresponding to that of the pot body. **The** lid body is configured to be openable and closable on the pot body; specifically, it is pivotally connected to the pot body via a pivot shaft and can pivot freely about a pivot axis of the pivot shaft between a closed position and an open position relative to the pot body, thereby facilitating the closing and opening of the pot body. When the lid body is closed on the pot body, the lid body covers the inner pot and a cooking space is formed between the lid body and the inner pot.

Furthermore, the cooking appliance may also include a temperature sensing device, such as an upper temperature sensing device arranged in the lid body and/or a lower temperature sensing device arranged below the inner pot receiving cavity. The cooking appliance may also include a lid-opening button mechanism, which is preferably arranged on the pot body and is connected, through a transmission mechanism, to a locking mechanism that locks the lid body to the pot body. When the lid-opening button mechanism is pressed, the lid body can automatically open.

The cooking appliance includes a control device and a heating device. The control device is used for achieving the cooking control of the cooking appliance and may be an MCU (Micro Control Unit). The heating device is used for heating the inner pot and may be a coil plate. The control device is electrically connected to the heating device to realize control over heating.

Both the upper and lower temperature sensing devices are electrically connected to the control device of the cooking appliance, to feed back the sensed temperature signal to the control device after sensing the temperature of the inner pot, so that the control device can achieve a more precise control over the cooking process based on the temperature signal. When the inner pot is placed in the inner pot receiving cavity of the pot body, the lower temperature sensing device can sense the temperature at the bottom of the inner pot, for example, the lower temperature sensing device may be in direct or indirect contact with the bottom of the inner pot.

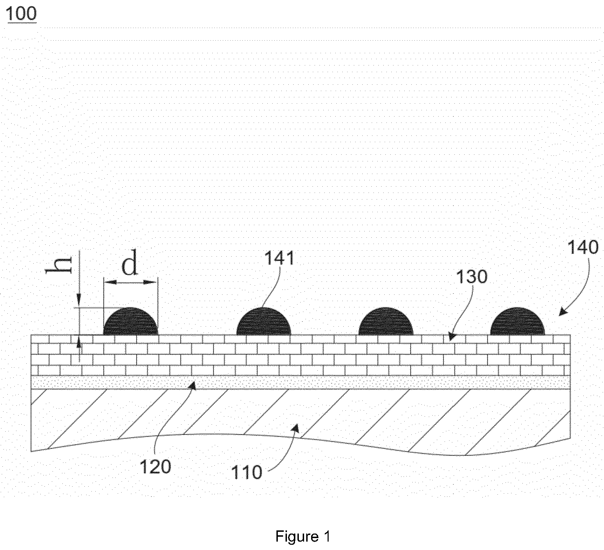

Another aspect of the present application provides an inner pot 100 for a cooking appliance. Referring to Figure 1, the inner pot 100 includes a substrate 110, a transition layer 120, a non-stick layer 130, and a wear-resistant particle layer 140. The transition layer 120 is attached to the inner surface of the substrate 110. The non-stick layer 130 is attached to the inner surface of the transition layer 120. The wear-resistant particle layer 140 is composed of multiple protruding particles 141 spaced apart from each other and attached to the inner surface of the non-stick layer 130.

According to the inner pot 100 of the present application, by arranging the multiple protruding particles 141 of the wear-resistant particle layer 140 on the surface of the non-stick layer 130, the scratch resistance of the inner pot 100 can be improved without damaging the continuity and integrity of the non-stick layer 130, i.e., without affecting the corrosion resistance of the inner pot 100 or causing a significant impact on the non-stick property.

The substrate 110 may be made of a material selected from aluminum, iron, and the like, thereby providing high structural strength.

The non-stick material of the non-stick layer 130 can be selected as at least one of polytetrafluoroethylene and polyfluoroalkoxy. This provides excellent non-stick property. The thickness of the non-stick layer 130 is preferably 10 µm to 60 µm to achieve a good non-stick property. In an optional embodiment, when the non-stick material is polytetrafluoroethylene, the thickness of the non-stick layer 130 is 10 µm to 30 µm. Alternatively, when the non-stick material is polyfluoroalkoxy, the thickness of the non-stick layer 130 is 20 µm to 60 µm.

The interface material of the transition layer 120 can be selected as polyamide-imide (PAI) and at least one of polytetrafluoroethylene and polyfluoroalkoxy. By selecting a material similar to that of the non-stick layer 130, the compatibility between the transition layer 120 and the non-stick layer 130 can be improved. Meanwhile, by adding polyamide-imide, the material polarity of the transition layer 120 is partially increased, such that the material polarity of the transition layer 120 lies between that of the substrate 110 and that of the non-stick layer 130. That is, the material polarity of the transition layer 120 is lower than that of the substrate 110 but higher than that of the non-stick layer 130. Thus, the material polarity of the transition layer 120 lies between that of the substrate 110 and that of the non-stick layer 130, allowing the transition layer 120 to form good bonding with both the substrate 110 and the non-stick layer 130. This further enables the non-stick layer 130 to be firmly attached, reducing the possibility of peeling. Preferably, water and color paste may also be added to the interface material to improve its sprayability and assist in adjusting the material polarity. The thickness of the transition layer 120 is preferably 10 µm to 20 µm.

The material polarity of the wear-resistant particle layer 140 is preferably higher than that of the non-stick layer 130. As such, the wear-resistant particle layer 140 is made of a material selected to be different from that of the non-stick layer 130, so that the protruding particles 141 of the wear-resistant particle layer 140 have good scratch resistance. For example, the wear-resistant material of the wear-resistant particle layer 140 can be selected from at least one of polyethersulfone (PES) and polyetherketoneketone (PAEK). When the wear-resistant material is selected as a mixture of PES and PAEK, preferably the proportion of PES is not less than 50%.

Since the material polarity of the non-stick layer 130 is relatively low, it is generally difficult to arrange other components or parts on the non-stick layer 130. Therefore, the protruding particles 141 of the wear-resistant particle layer 140 are formed by the melted wear-resistant material contracting, and cooling and solidifying on the melted non-stick material. This can achieve the firm attachment of the protruding particles 141 of the wear-resistant particle layer 140 to the surface of the non-stick layer 130 without damaging the integrity of the non-stick layer 130. In other words, the transition layer 120 and the non-stick layer 130 are bonded by thermal fusion, and the non-stick layer 130 and the protruding particles 141 of the wear-resistant particle layer 140 are bonded by thermal fusion.

Specifically, the material polarity of the non-stick material is low, while the material polarity of the wear-resistant material is relatively high. In other words, the surface energy of the non-stick material is low, while the surface energy of the wear-resistant material is high. During preparation, after both the non-stick material and the wear-resistant material are melted, the surface tension of the melted non-stick material is lower than that of the melted wear-resistant material. The melted wear-resistant material is difficult to wet and spread on the surface of the melted non-stick material, and therefore contracts on the surface of the melted non-stick material to form small protrusions with smoothly transitioning curved surfaces or spherical protrusions. After the melted wear-resistant material and the melted non-stick material both cool and solidify, a wear-resistant particle layer 140 having multiple protruding particles 141 that is thermally bonded to the surface of the non-stick layer 130 is formed.

The magnitudes of the material polarity described above can be characterized in various ways. For example, they can be characterized by the difference in surface energy of solid materials as described above, or by the difference in solubility parameters of materials, or by the difference in surface tension of liquid materials, or the like.

Exemplarily, the material polarity, surface energy, and the like can be characterized by the contact angle. For instance, if the contact angle of water on the non-stick material is greater than that on the wear-resistant material, it indicates that the surface energy of the non-stick material is lower than that of the wear-resistant material. Conversely, if the contact angle of water on the non-stick material is smaller than that on the wear-resistant material, it indicates that the surface energy of the non-stick material is higher than that of the wear-resistant material. Preferably, during testing, the surfaces of the non-stick material and the wear-resistant material are required to have approximately the same roughness.

Further, the height h (see Figure 1) by which the protruding particles 141 of the wear-resistant particle layer 140 protrude from the non-stick layer 130 is 10 µm to 500 µm, preferably 20 µm to 200 µm, more preferably 50 µm to 100 µm. The diameter d (see Figure 1) of the protruding particles 141 of the wear-resistant particle layer 140 is 10 µm to 500 µm, preferably 50 µm to 300 µm, more preferably 100 µm to 200 µm. This can thereby improve the wear resistance and increase the number of scratch cycles that can be withstood.

The ratio of the total area of the contact surfaces of the protruding particles 141 of the wear-resistant particle layer 140 with the non-stick layer 130, to the inner surface area of the non-stick layer 130, is 5% to 50%, preferably 10% to 30%, more preferably 15% to 25%. According to this embodiment, the scratch resistance of the inner pot 100 can be improved while further reducing the impact on the non-stick property.

The wear resistance of the inner pot 100 in the present application will be described below with reference to the test in Table 1.

In Table 1, the comparative example is not provided with the non-stick layer 130 or the wear-resistant particle layer 140. In Embodiments 1 to 8, the height h and diameter d of the protruding particles 141 are set differently.

The test procedure is as follows: fixing a sample on a wear testing machine, applying a pressure of 45 N, adding a 0.5% aqueous solution of detergent to moisten the wear surface, using a 3M-7447C scouring pad to perform a wear cycles test, replacing the scouring pad every 500 cycles, terminating the test upon the occurrence of ten linear exposures of the substrate or local scratches developing into large-area or entire-piece peeling, and recording the maximum number of wear cycles that can be withstood.

**Table 1**

| | Particle Height h (µm) | Particle Diameter d (µm) | Flat Plate Wear Resistance (cycles) |
|---|---|---|---|
| Comparative Example | | | 9000 |
| Embodiment 1 | 10~30 | 50-100 | 30000 |
| Embodiment 2 | 30~50 | 100~150 | 50000 |
| Embodiment 3 | 50~100 | 150~200 | 100000 |
| Embodiment 4 | 100~150 | 200~250 | 110000 |
| Embodiment 5 | 150~200 | 200~250 | 120000 |
| Embodiment 6 | 200~250 | 250~300 | 140000 |
| Embodiment 7 | 250~300 | 250~300 | 150000 |
| Embodiment 8 | 350~400 | 300~400 | 150000 |

Another aspect of the present application provides a preparation method for inner pot 100, for preparing the aforementioned inner pot 100. The preparation method of the inner pot 100 includes:
S1: preparing the substrate 110. The step S1 specifically includes performing sandblasting treatment and/or degreasing treatment on the substrate 110 to increase the roughness of the substrate 110. According to the above configuration, the attachment strength of the transition layer 120 can be improved.
S2: preparing the transition layer 120 on the substrate 110. The step S2 specifically includes: S21: spraying an interface material onto the substrate 110 to form an interface material film which has a thickness of 10 µm to 20 µm; S22: heating the interface material film at 80°C to 200°C for 5 min to 20 min to form the transition layer 120. According to this embodiment, the process is simple and low-cost.
S3: preparing the non-stick layer 130 and the wear-resistant particle layer 140.

In an optional embodiment of the preparation method for inner pot 100 of the present application, the step S3 includes: spraying a non-stick material onto the inner side of the transition layer 120 to form a non-stick material film; spraying a wear-resistant material onto an inner side of the non-stick material film to form a wear-resistant material film; heating the non-stick material film and the wear-resistant material film to melt them together; and allowing the melted wear-resistant material to contract on the melted non-stick material, cooling and solidifying to form the non-stick layer 130 attached to the transition layer 120 and the multiple protruding particles 141 attached to the non-stick layer 130.

According to the preparation method for inner pot 100 of the optional embodiment of the present application, the wear-resistant particle layer 140 can be firmly attached to the surface of the non-stick layer 130 without damaging the continuity and integrity of the non-stick layer 130, thereby achieving the technical effect of improving the scratch resistance of the inner pot 100 without affecting the corrosion resistance of the inner pot 100 or causing a significant impact on the non-stick property; furthermore, the non-stick layer 130 and the wear-resistant particle layer 140 are sintered and formed in a single step, which reduces the processing steps and is beneficial for improving the production efficiency.

In another optional embodiment of the preparation method for inner pot 100 of the present application, the step S3 includes:
S31: spraying a non-stick material onto the inner side of the transition layer 120 to form a non-stick material film, heating the non-stick material film to melt it, cooling and solidifying to form the non-stick layer 130.
S32: spraying a wear-resistant material onto the inner side of the non-stick layer 130 to form a wear-resistant material film, heating the wear-resistant material film and the non-stick layer 130 to melt them together, allowing the melted wear-resistant material to contract on the melted non-stick material, cooling and solidifying to form the non-stick layer 130 attached to the transition layer 120 and the multiple protruding particles 141 attached to the non-stick layer 130.

According to the preparation method for inner pot 100 of the another optional embodiment of the present application, the wear-resistant particle layer 140 can be firmly attached to the surface of the non-stick layer 130 without damaging the continuity and integrity of the non-stick layer 130, thereby achieving the technical effect of improving the scratch resistance of the inner pot 100 without affecting the corrosion resistance of the inner pot 100 or causing a significant impact on the non-stick property; furthermore, the non-stick layer 130 and the wear-resistant particle layer 140 are sintered and formed in two separate steps, which improves the preparation success rate and is beneficial for increasing the product yield and reducing the production cost.

In the two preparation methods described above, the heating (or sintering) temperature is 350°C to 440°C, and the heating (or sintering) time is 3 min to 30 min. This is conducive to improving the production efficiency and reducing the cost; meanwhile, the above conditions are conducive to adjusting the surface tension of the melted wear-resistant material and the melted non-stick material, so that the melted wear-resistant material can better contract on the melted non-stick material to form a firmly attached wear-resistant particle layer 140.

In S3, the thickness of the non-stick material film sprayed is 10 µm to 60 µm, and the thickness of the wear-resistant material film sprayed is 5 µm to 100 µm. This is thus beneficial for forming the wear-resistant particle layer 140 having predetermined height and diameter.

The wear-resistant material is configured as powder or an aqueous dispersion with a solid content of 20% to 50%, and the particle size of the particles of the wear-resistant material is 1 µm to 5 µm; preferably, the wear-resistant material film is formed by means of electrostatic spraying or pressure spraying. Thus, the process is simple, the cost is low, and the product yield is high.

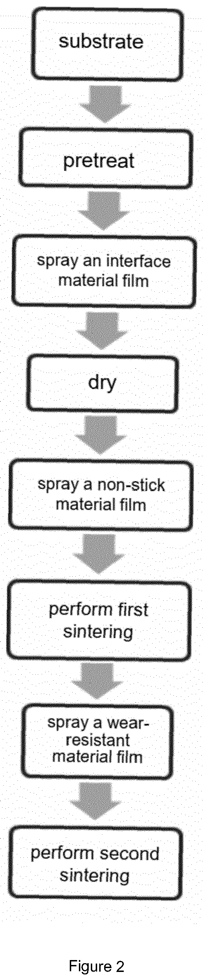

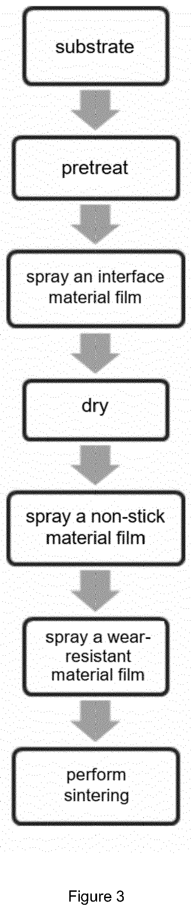

The two preparation methods as described above will be described below in more detail with reference to Figures 2 and 3.

Referring to Figure 2, in this preferred embodiment according to a preparation method, first, the substrate 110 undergoes pretreatment such as sandblasting and degreasing and the like. Next, an interface material is sprayed onto the surface of the substrate 110 to form an interface material film which has a uniform thickness ranging from 10 µm to 20 µm. The interface material film is then subjected to drying treatment to prepare for the next processing step. Preferred drying conditions include a drying temperature of 80°C to 200°C and a drying time of 5 min to 20 min. As a result, the transition layer 120 is formed.

Next, a non-stick material is sprayed onto the surface of the transition layer 120 to form a non-stick material film with a certain thickness. When PTFE is used as the non-stick material, the preferred thickness of the non-stick material film is between 10 µm and 30 µm. When PFA is used as the non-stick material, the preferred thickness of the non-stick material film is between 20 µm and 60 µm. The non-stick material may be a powder coating or a liquid coating, and may be sprayed by powder electrostatic spraying, air pressure spraying, liquid electrostatic spraying, or the like.

Subsequently, a first sintering is performed to form a dense non-stick layer 130. Preferred sintering conditions include: when PTFE is used as the non-stick material, the sintering temperature is 380°C to 440°C, and the sintering time is 3 min to 5 min; when PFA is used as the non-stick material, the sintering temperature is 380°C to 420°C, and the sintering time is 5 min to 30 min.

Thereafter, a wear-resistant material such as PES material is sprayed onto the surface of the formed non-stick layer 130 to form a wear-resistant material film with a certain thickness ranging from 5 µm to 100 µm, preferably from 10 µm to 50 µm. The wear-resistant material may be a powder coating or a liquid coating, and may be sprayed by powder electrostatic spraying, liquid air pressure spraying, liquid electrostatic spraying, or the like.

Finally, a second sintering is performed to simultaneously melt the non-stick layer (e.g., PFA) and the wear-resistant material film (e.g., PES). Due to differences in surface tension, specifically, the surface tension of the melted PFA is lower while that of the melted PES is relatively higher, as a result, the melted PES contracts on the surface of the PFA, forming particle shapes with certain protrusions. At the same time, at the interface between PFA and PES, both materials melt and fuse with each other, forming a thermally bonded interface with very strong bonding. Consequently, after cooling and solidification, the PES protruding particles are not easily detached. The conditions for the second sintering herein are as follows: the sintering temperature is 350°C to 430°C, and the sintering time is 3 min to 20 min. Preferred sintering conditions are as follows: the sintering temperature is 380°C to 400°C, and the sintering time is 5 min to 10 min.

Referring to Figure 3, in this preferred embodiment according to another preparation method, first, the substrate 110 undergoes pretreatment such as sandblasting and degreasing and the like. Next, an interface material is sprayed onto the surface of the substrate 110 to form an interface material film which has a uniform thickness ranging from 10 µm to 20 µm. The interface material film is then subjected to drying treatment to prepare for the next processing step. Preferred drying conditions include a drying temperature of 80°C to 200°C and a drying time of 5 min to 20 min. As a result, the transition layer 120 is formed.

Next, a non-stick material is sprayed onto the surface of the transition layer 120 to form a non-stick material film with a certain thickness. When **PTFE** is used as the non-stick material, the preferred thickness of the non-stick material film is between 10 µm and 30 µm. When PFA is used as the non-stick material, the preferred thickness of the non-stick material film is between 20 µm and 60 µm. The non-stick material may be a powder coating or a liquid coating, and may be sprayed by powder electrostatic spraying, air pressure spraying, liquid electrostatic spraying, or the like.

Subsequently, a wear-resistant material is sprayed directly onto the surface of the non-stick material film to form a wear-resistant material film with a certain thickness ranging from 5 µm to 100 µm, preferably from 10 µm to 50 µm. The wear-resistant material may be a powder coating or a liquid coating, and may be sprayed by powder electrostatic spraying, liquid air pressure spraying, liquid electrostatic spraying, or the like.

Finally, a single sintering is performed to simultaneously melt the non-stick material film (e.g., PTFE) and the wear-resistant material film (e.g., PES). Due to differences in surface tension, specifically, the surface tension of the melted **PTFE** is lower while that of the melted PES is relatively higher, as a result, the melted PES contracts on the surface of the **PTFE,** forming particle shapes with certain protrusions. At the same time, at the interface between **PTFE** and PES, both materials melt and fuse with each other, forming a thermally bonded interface with very strong bonding. Consequently, after cooling and solidification, the PES protruding particles are not easily detached. The conditions for the sintering herein are as follows: the sintering temperature is 350°C to 430°C, and the sintering time is 3 min to 20 min. Preferred sintering conditions are as follows: the sintering temperature is 380°C to 430°C, and the sintering time is 3 min to 20 min.

It should be understood that although the inner pot described herein is an inner pot for a cooking appliance, the concept of the present invention may also be suitably applied to other types of non-stick cookware such as non-stick woks and frying pans.

The processes and steps described in all of the above preferred embodiments are merely exemplary. Various processing operations may be performed in a different order than that described above unless adverse effects would result. The steps of the above processes may also be added, combined, or omitted as needed in practice.

Unless otherwise defined, the technical and scientific terms used herein have the same meanings as commonly understood by those skilled in the art to which this application pertains. The terms used herein is for the purpose of describing particular embodiments only and is not intended to limit the present application. Features described in one embodiment may be applied to another embodiment, individually or in combination with other features, unless such features are inapplicable or otherwise specified in the another embodiment.

The present application has been described by way of the foregoing embodiments. However, it should be understood that these embodiments are provided merely for purposes of illustration and explanation, and are not intended to limit the present application. Various modifications and variations may be made in accordance with the teachings of the present application, and all such modifications and variations fall within the scope of protection sought by the present application.

## Claims

1. An inner pot (100) for a cooking appliance, **characterized in that** the inner pot (100) comprises:
a substrate (110);
a transition layer (120), which is attached to an inner surface of the substrate (110);
a non-stick layer (130), which is attached to an inner surface of the transition layer (120); and
a wear-resistant particle layer (140), which is composed of multiple protruding particles (141) spaced apart from each other and attached to an inner surface of the non-stick layer (130).

2. The inner pot (100) according to claim 1, **characterized in that** a thickness of the transition layer (120) is 10 µm to 20 µm.

3. The inner pot (100) according to any one of claims 1 to 2, **characterized in that** the thickness of the non-stick layer (130) is 10 µm to 60 µm.

4. The inner pot (100) according to any one of claims 1 to 3, **characterized in that** a height (h) by which the protruding particles (141) of the wear-resistant particle layer (140) protrude from the inner surface of the non-stick layer (130) is 10 µm to 500 µm.

5. The inner pot (100) according to claim 4, **characterized in that** the height (h) by which the protruding particles (141) of the wear-resistant particle layer (140) protrude from the inner surface of the non-stick layer (130) is 20 µm to 200 µm.

6. The inner pot (100) according to claim 5, **characterized in that** the height (h) by which the protruding particles (141) of the wear-resistant particle layer (140) protrude from the inner surface of the non-stick layer (130) is 50 µm to 100 µm.

7. The inner pot (100) according to any one of claims 1 to 6, **characterized in that** a diameter (d) of the protruding particles (141) of the wear-resistant particle layer (140) is 10 µm to 500 µm.

8. The inner pot (100) according to claim 7, **characterized in that** the diameter (d) of the protruding particles (141) of the wear-resistant particle layer (140) is 50 µm to 300 µm.

9. The inner pot (100) according to claim 8, **characterized in that** the diameter (d) of the protruding particles (141) of the wear-resistant particle layer (140) is 100 µm to 200 µm.

10. The inner pot (100) according to any one of claims 1 to 9, **characterized in that** a ratio of a total area of contact surfaces of the protruding particles (141) of the wear-resistant particle layer (140) with the non-stick layer (130), to an inner surface area of the non-stick layer (130), is 5% to 50%.

11. The inner pot (100) according to claim 10, **characterized in that** the ratio of the total area of the contact surfaces of the protruding particles (141) of the wear-resistant particle layer (140) with the non-stick layer (130), to the inner surface area of the non-stick layer (130), is 10% to 30%.

12. The inner pot (100) according to claim 11, **characterized in that** the ratio of the total area of the contact surfaces of the protruding particles (141) of the wear-resistant particle layer (140) with the non-stick layer (130), to the inner surface area of the non-stick layer (130), is 15% to 25%.

13. The inner pot (100) according to any one of claims 1 to 12, **characterized in that** a material polarity of the transition layer (120) is lower than a material polarity of the substrate (110), and the material polarity of the transition layer (120) is higher than a material polarity of the non-stick layer (130).

14. The inner pot (100) according to claim 13, **characterized in that** the transition layer (120) and the non-stick layer (130) are bonded by thermal fusion.

15. The inner pot (100) according to any one of claims 1 to 14, **characterized in that** a material polarity of the wear-resistant particle layer (140) is higher than the material polarity of the non-stick layer (130).

16. The inner pot (100) according to claim 15, **characterized in that** the non-stick layer (130) and the protruding particles (141) of the wear-resistant particle layer (140) are bonded by thermal fusion.

17. The inner pot (100) according to claim 16, **characterized in that** the protruding particles (141) of the wear-resistant particle layer (140) are formed by a melted wear-resistant material contracting, cooling, and solidifying on a melted non-stick material.

18. The inner pot (100) according to any one of claims 1 to 17, **characterized in that**:
an interface material of the transition layer (120) comprises a material similar to a non-stick material of the non-stick layer (130); and a material is added to the interface material of the transition layer (120) such that a material polarity of the transition layer (120) is lower than a material polarity of the substrate (110) and higher than a material polarity of the non-stick layer (130).

19. The inner pot (100) according to claim 18, **characterized in that** the interface material of the transition layer (120) comprises polyamide-imide, and at least one of polytetrafluoroethylene and tetrafluoroethylene-perfluoroalkoxy vinyl ether copolymer.

20. The inner pot (100) according to any one of claims 1 to 19, **characterized in that** a non-stick material of the non-stick layer (130) comprises at least one of polytetrafluoroethylene and tetrafluoroethylene-perfluoroalkoxy vinyl ether copolymer.

21. The inner pot (100) according to claim 20, **characterized in that**:
the non-stick material is polytetrafluoroethylene, and a thickness of the non-stick layer (130) is 10 µm to 30 µm; or
the non-stick material is tetrafluoroethylene-perfluoroalkoxy vinyl ether copolymer, and a thickness of the non-stick layer (130) is 20 µm to 60 µm.

22. The inner pot (100) according to any one of claims 1 to 21, **characterized in that** a wear-resistant material of the wear-resistant particle layer (140) comprises at least one of polyethersulfone and polyaryletherketone.

23. The inner pot (100) according to claim 22, **characterized in that** the wear-resistant material of the wear-resistant particle layer (140) is a mixture of polyethersulfone and polyaryletherketone, wherein a mass percentage of the polyethersulfone is not less than 50%.

24. A cooking appliance, **characterized in that** it comprises:
a pot body;
the inner pot (100) according to any one of claims 1 to 23, which can be placed in the pot body and removed from the pot body;
a lid body, which is configured to be openable and closable on the pot body, wherein when the inner pot (100) is placed in the pot body and the lid body is closed on the pot body, a cooking space is formed between the lid body and the inner pot (100).

25. A preparation method for inner pot (100), used for preparing the inner pot (100) according to any one of claims 1 to 23, **characterized in that** the preparation method for inner pot (100) comprises:
S1: preparing the substrate (110);
S2: preparing the transition layer (120) on the substrate (110);
S3: preparing the non-stick layer (130) and the wear-resistant particle layer (140),
wherein said S3 comprises: spraying a non-stick material onto an inner side of the transition layer (120) to form a non-stick material film, spraying a wear-resistant material onto an inner side of the non-stick material film to form a wear-resistant material film, heating the non-stick material film and the wear-resistant material film to melt them together, allowing the melted wear-resistant material to contract on the melted non-stick material, cooling and solidifying to form the non-stick layer (130) attached to the transition layer (120) and the multiple protruding particles (141) attached to the non-stick layer (130).

26. A preparation method for inner pot (100), used for preparing the inner pot (100) according to any one of claims 1 to 23, **characterized in that** the preparation method for inner pot (100) comprises:
S1: preparing the substrate (110);
S2: preparing the transition layer (120) on the substrate (110);
S3: preparing the non-stick layer (130) and the wear-resistant particle layer (140),
wherein said S3 comprises:
S31: spraying a non-stick material onto an inner side of the transition layer (120) to form a non-stick material film, heating the non-stick material film to melt it, cooling and solidifying to form the non-stick layer (130);
S32: spraying a wear-resistant material onto an inner side of the non-stick layer (130) to form a wear-resistant material film, heating the wear-resistant material film and the non-stick layer (130) to melt them together, allowing the melted wear-resistant material to contract on the melted non-stick material, cooling and solidifying to form the non-stick layer (130) attached to the transition layer (120) and the multiple protruding particles (141) attached to the non-stick layer (130).

27. The preparation method for inner pot (100) according to claim 25 or 26, **characterized in that** a heating temperature is 350°C to 440°C, and a heating time is 3 min to 30 min.

28. The preparation method for inner pot (100) according to any one of claims 25 to 27, **characterized in that** a thickness of the non-stick material film is 10 µm to 60 µm;
and **in that** a thickness of the wear-resistant material film is 5 µm to 100 µm.

29. The preparation method for inner pot (100) according to claim 28, **characterized in that** the thickness of the wear-resistant material film is 10 µm to 50 µm.

30. The preparation method for inner pot (100) according to any one of claims 25 to 29, **characterized in that** said S1 further comprises: performing sandblasting treatment and/or degreasing treatment on the substrate (110) to increase a roughness of the substrate (110).

31. The preparation method for inner pot (100) according to any one of claims 25 to 30, **characterized in that** said S2 further comprises:
S21: spraying an interface material onto the substrate (110) to form an interface material film, a thickness of the interface material film being 10 µm to 20 µm;
S22: heating the interface material film at 80°C to 200°C for 5 min to 20 min to form the transition layer (120).

32. The preparation method for inner pot (100) according to any one of claims 25 to 31, **characterized in that** the wear-resistant material is configured as powder or an aqueous dispersion with a solid content of 20% to 50%, a particle size of particles of the wear-resistant material is 1 µm to 5 µm, and the wear-resistant material film is formed by means of electrostatic spraying or pressure spraying.
